# EUROPEAN PATENT APPLICATION

(11) **EP 4 817 972 A1**
(43) Date of publication of application: **07.10.2026**
(21) Application number: 26158830.5
(22) Date of filing: 16.02.2026
(51) Int. Cl.: B60T 8/32, B60T 8/17, B60T 8/88, B60T 13/74, B60T 17/22, F16D 55/38, F16D 65/18

(54) **AN ELECTROMECHANICAL BRAKE SYSTEM**

(30) Priority: 18.02.2025 US 202563759675 P; 06.01.2026 US 202619441424
(71) Applicant: Goodrich Corporation, Charlotte, NC 28217-4578 (US)
(72) Inventor: GEORGIN, Marc J, Oakwood, 45419 (US); HICKEY, Gregory M., Bellbrook, 45305 (US); BAINS, Resham, Tipp City, 45371 (US); ROBBINS, Lane B., Pleasant Hill, OH, 05359 (US)
(74) Representative: Dehns

(57) **Abstract**

An electromechanical brake (E-brake) system (500) including a first brake control unit (402a), a second brake control unit (402b), a first electromechanical brake actuator controller (430), a second electromechanical brake actuator controller (432), a first wheel and brake assembly (422), and a second wheel and brake assembly (424). The first electromechanical brake actuator controller includes a first monitor circuit (450) communicatively coupled to the first brake control unit and the second brake control unit. The second electromechanical brake actuator controller includes a second monitor circuit (452) communicatively coupled to the first brake control unit and the second brake control unit. The first wheel and brake assembly is communicatively coupled to the first electromechanical brake actuator controller and the second electromechanical brake actuator controller. The second wheel and brake assembly is communicatively coupled to the first electromechanical brake actuator controller and the second electromechanical brake actuator controller.

## Description

### CROSS-REFERENCE TO RELATED APPLICATIONS

This application claims priority to and the benefit of U.S. Provisional Application No. 63/759,675, filed February 18, 2025, and entitled "ELECTROMECHANICAL BRAKE ARCHITECTURES WITH A HYBRID BRAKE CONTROL UNIT AND EMERGENCY BRAKING,".

### FIELD

The present disclosure generally relates to aircraft brake systems, and more specifically, to electromechanical brake (E-brake) architectures with a hybrid brake control unit (BCU) and emergency braking.

### BACKGROUND

Typically, an aircraft may comprise an electromechanical brake (E-brake) system that utilizes a plurality of electromechanical brake actuators (EBAs) configured to apply force to a brake stack on an aircraft wheel. As aircrafts are converted to utilize more electricity and thus utilize such E-brake systems, there is a need for E-brake architectures that address two-wheel aircrafts, such as military and business jets, as well as four-wheel aircraft for Next Generation Single-Aisle (NGSA) and regional jets.

### SUMMARY

According to various embodiments of the present disclosure, an electromechanical brake (E-brake) system is provided. The E-brake system includes a first brake control unit, a second brake control unit, a first electromechanical brake actuator controller, a second electromechanical brake actuator controller, a first wheel and brake assembly, and a second wheel and brake assembly. The first electromechanical brake actuator controller includes a first monitor circuit. The first monitor circuit is communicatively coupled to the first brake control unit and the second brake control unit. The second electromechanical brake actuator controller includes a second monitor circuit. The second monitor circuit is communicatively coupled to the first brake control unit and the second brake control unit. The first wheel and brake assembly is communicatively coupled to the first electromechanical brake actuator controller and the second electromechanical brake actuator controller. The second wheel and brake assembly is communicatively coupled to the first electromechanical brake actuator controller and the second electromechanical brake actuator controller.

In various embodiments, the first monitor circuit is independent of a first processor in the first electromechanical brake actuator controller. In various embodiments, the second monitor circuit is independent of a second processor in the second electromechanical brake actuator controller. In various embodiments, the first monitor circuit and the second monitor circuit are dedicated Field Programmable Gate Arrays (FPGA).

In various embodiments, the first brake control unit is communicatively coupled to the first electromechanical brake actuator controller and the second electromechanical brake actuator controller via a first control area network bus. In various embodiments, the second brake control unit is communicatively coupled to the first electromechanical brake actuator controller and the second electromechanical brake actuator controller via a second control area network bus.

In various embodiments, responsive to both the first control area network bus and the second control area network bus being active, the first wheel and brake assembly and the second wheel and brake assembly are controlled via the first brake control unit.

In various embodiments, responsive to one of the first control area network bus or the second control area network bus being inactive, the first wheel and brake assembly and the second wheel and brake assembly are controlled via at least one of the first brake control unit or the second brake control unit associated with the other one of the first control area network bus or the second control area network bus that is active.

In various embodiments, each of the first wheel and brake assembly and the second wheel and brake assembly include a first electromechanical brake actuator and a second electromechanical brake actuator. In various embodiments, the first electromechanical brake actuator is controlled via the first electromechanical brake actuator controller. In various embodiments, the second electromechanical brake actuator is controlled via the second electromechanical brake actuator controller.

In various embodiments, responsive to a loss of at least one of the first electromechanical brake actuator controller or the second electromechanical brake actuator controller, the other one of the first electromechanical brake actuator controller or the second electromechanical brake actuator controller that is operational is configured to provide 50% differential braking force with antiskid protection to the first wheel and brake assembly and the second wheel and brake assembly.

In various embodiments, responsive to a loss of at least one of the first brake control unit or the second brake control unit, at least one of the first brake control unit or the second brake control unit that is operational is configured to provide full braking of the first wheel and brake assembly and the second wheel and brake assembly.

In various embodiments, the E-brake system further includes a first electric power unit and a second electric power unit. In various embodiments, the first electric power unit is configured to power the first brake control unit and the first electromechanical brake actuator controller. In various embodiments, the second electric power unit is configured to power the second brake control unit and the second electromechanical brake actuator controller. In various embodiments, responsive to a loss of one of the first electric power unit or the second electric power unit, at least one of the first brake control unit and the first electromechanical brake actuator controller or the second brake control unit and the second electromechanical brake actuator controller that is powered by an operational one of the first electric power unit or the second electric power unit is configured to provide 50% differential braking force with antiskid protection.

In various embodiments, the E-brake system further includes a third electromechanical brake actuator controller. In various embodiments, the third electromechanical brake actuator controller includes a third monitor circuit. In various embodiments, the third monitor circuit is communicatively coupled to the first brake control unit and the second brake control unit. In various embodiments, the third monitor circuit is independent of a third processor in the third electromechanical brake actuator controller. In various embodiments, the third monitor circuit is a dedicated Field Programmable Gate Arrays (FPGA).

In various embodiments, the E-brake system further includes a first electric power unit and a second electric power unit. In various embodiments, the first electric power unit is configured to power the first brake control unit, the first electromechanical brake actuator controller, the second electromechanical brake actuator controller, and the third electromechanical brake actuator controller. In various embodiments, the second electric power unit is configured to power the second brake control unit, the first electromechanical brake actuator controller, the second electromechanical brake actuator controller, and the third electromechanical brake actuator controller.

In various embodiments, each of the first wheel and brake assembly and the second wheel and brake assembly include a first electromechanical brake actuator, a second electromechanical brake actuator, and a third electromechanical brake actuator. In various embodiments, the first electromechanical brake actuator is controlled via the first electromechanical brake actuator controller. In various embodiments, the second electromechanical brake actuator is controlled via the second electromechanical brake actuator controller. In various embodiments, the third electromechanical brake actuator is controlled via the third electromechanical brake actuator controller.

In various embodiments, responsive to a loss of one of the first electromechanical brake actuator controller, the second electromechanical brake actuator controller, or the third electromechanical brake actuator controller, operational electromechanical brake actuator controllers are configured to provide 100% differential braking force with antiskid protection via associated electromechanical brake actuators.

Also disclosed herein is an electromechanical brake (E-brake) system. The E-brake system includes an outboard brake control unit, an inboard brake control unit, an outboard electromechanical brake actuator controller, an inboard electromechanical brake actuator controller, a left outboard wheel and brake assembly, a right outboard wheel and brake assembly, a left inboard wheel and brake assembly, and a right inboard wheel and brake assembly. The outboard electromechanical brake actuator controller includes a first monitor circuit. The first monitor circuit is communicatively coupled to the outboard brake control unit and the inboard brake control unit. The inboard electromechanical brake actuator controller includes a second monitor circuit. The second monitor circuit is communicatively coupled to the outboard brake control unit and the inboard brake control unit. The left outboard wheel and brake assembly is communicatively coupled to the outboard electromechanical brake actuator controller. The right outboard wheel and brake assembly is communicatively coupled to the outboard electromechanical brake actuator controller. The left inboard wheel and brake assembly is communicatively coupled to the inboard electromechanical brake actuator controller. The right inboard wheel and brake assembly is communicatively coupled to the inboard electromechanical brake actuator controller.

In various embodiments, the first monitor circuit is independent of a first processor in the outboard electromechanical brake actuator controller. In various embodiments, the second monitor circuit is independent of a second processor in the inboard electromechanical brake actuator controller. In various embodiments, the first monitor circuit and the second monitor circuit are dedicated Field Programmable Gate Arrays (FPGA).

In various embodiments, the outboard brake control unit is communicatively coupled to the outboard electromechanical brake actuator controller and the inboard electromechanical brake actuator controller via a first control area network bus. In various embodiments, the inboard brake control unit is communicatively coupled to the outboard electromechanical brake actuator controller and the inboard electromechanical brake actuator controller via a second control area network bus.

In various embodiments, responsive to both the first control area network bus and the second control area network bus being active, the left outboard wheel and brake assembly and the right outboard wheel and brake assembly are configured to be controlled via the outboard brake control unit and the left inboard wheel and brake assembly and the right inboard wheel and brake assembly are configured to be controlled via the inboard brake control unit.

In various embodiments, responsive to one of the first control area network bus or the second control area network bus being inactive, the left outboard wheel and brake assembly, the right outboard wheel and brake assembly, the left inboard wheel and brake assembly, and the right inboard wheel and brake assembly are configured to be controlled via at least one of the outboard brake control unit or the inboard brake control unit associated with the other one of the first control area network bus or the second control area network bus that is active.

In various embodiments, responsive to a loss of at least one of the outboard electromechanical brake actuator controller or the inboard electromechanical brake actuator controller, the other one of the outboard electromechanical brake actuator controller or the inboard electromechanical brake actuator controller that is operational is configured to provide 50% differential braking force with antiskid protection to the respective ones of the left outboard wheel and brake assembly, the right outboard wheel and brake assembly, the left inboard wheel and brake assembly, or the right inboard wheel and brake assembly.

In various embodiments, responsive to a loss of at least one of the outboard brake control unit or the inboard brake control unit, at least one of the outboard brake control unit or the inboard brake control unit that is operational is configured to provide full braking of the left outboard wheel and brake assembly, the right outboard wheel and brake assembly, the left inboard wheel and brake assembly, and the right inboard wheel and brake assembly by applying a currently applied respective braking to all braking assemblies.

The present disclosure may include any one or more of the individual features disclosed above and/or below alone or in any combination thereof. The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft having multiple landing gear and brakes, in accordance with various embodiments.
FIG. 2 illustrates an aircraft brake in accordance with various embodiments.
FIG. 3 illustrates a block diagram of an electromechanical brake actuator control system in accordance with various embodiments.
FIGS. 4A and 4B illustrate a two wheels and two actuators per brake electromechanical brake (E-brake) system architecture, in accordance with various embodiments.
FIGS. 5A and 5B illustrate a two wheels and three actuators per brake E-brake system architecture, in accordance with various embodiments.
FIGS. 6A and 6B illustrate a four wheels and four actuators per brake E-brake system architecture, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

As stated previously, as aircrafts are converted to utilize more electricity and thus utilize electromechanical brake (E-brake) systems, there is a need for E-brake architectures that address two-wheel aircrafts, such as business jets, as well as four-wheel aircraft for Next Generation Single-Aisle (NGSA) and regional jets.

As discussed hereafter, in various embodiments, E-brake system architectures are disclosed for aircrafts with two wheels and two actuators per brake, aircrafts with two wheels and three actuators per brake, and aircrafts with four wheels and four actuators per brake. In various embodiments, these E-brake system architectures utilize two independent brake control units (BCUs). In various embodiments, the disclosed E-brake system architectures provide advantages to protect the E-brake system against certain events in the aircraft electrical bay. In various embodiments, the described E-brake system architectures, although in communications with each other, utilizes BCUs that function independently of each other.

In various embodiments, the E-brake system architectures include electromechanical brake actuator controllers (EBACs) that render a decision to apply the brakes. In various embodiments, this feature is implemented by having monitor circuitry in each EBAC. In various embodiments, the monitor circuitry is independent of the rest of the electronics and implemented in simple electronics, including a dedicated Field Programmable Gate Array (FPGA) that is, in various embodiments, of a different design than the processor used in the EBAC. In various embodiments, the monitor circuitry receives the brake information from both BCUs and decides which brake command to apply depending on the E-brake system status.

In various embodiments, the monitor circuitry has also an emergency braking function that provides the pilot with a means to apply braking using a method independent/dissimilar from the typical brake by wire (BBW) system. In various embodiments, one implementation is as follows: there is a switch in the cockpit which has three positions: slippery, wet, and dry runway and taxiway conditions (or for example low, medium, good). In various embodiments, the pilot may choose one of the three settings and the system bypasses completely the BCUs and typical EBAC circuitry and command the EBA motors directly by applying a brake force to a certain level defined by the switch. These levels of braking are typically defined with the original equipment manufacturer (OEM) during system development, and provide lower levels of applied braking force to attempt to provide as much braking as possible without causing tires to lock/burst since antiskid is not available in this emergency mode. Various embodiments have the Linear Variable Differential Transformers (LVDTs) of the pedals connected to the monitor that may contain simple hardware components to demodulate the LVDT signals and provide a few levels of applied braking force as explained previously with the switches.

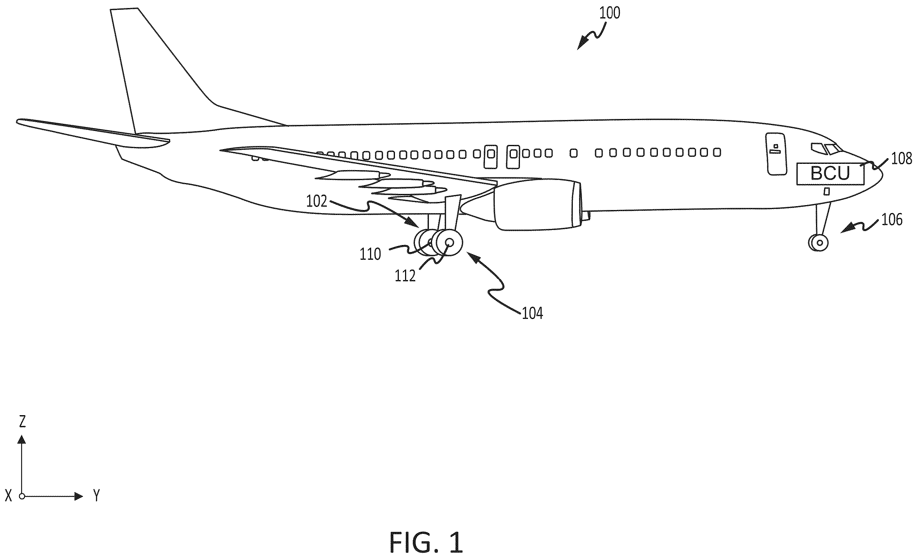

Referring to FIG. 1, in accordance with various embodiments, an aircraft 100 is illustrated. The aircraft 100 includes landing gear, which include a left main landing gear 102, a right main landing gear 104, and a nose landing gear 106. The landing gear support the aircraft 100 when it is not flying, allowing the aircraft 100 to taxi, take off, and land without damage. While the disclosure refers to the three landing gear configurations just referred, the disclosure nevertheless contemplates any number of landing gear configurations.

The aircraft 100 further includes one or more brake control units (BCU) 108 configured to control a left main brake mechanism 110 of the left main landing gear 102 and a right main brake mechanism 112 of the right main landing gear 104. The BCU 108 is configured to control the application of brake mechanisms 110, 112 in response to input from aircraft 100 or an authorized user, i.e. the pilot. The BCU 108 is further configured to control a parking brake functionality of the brake mechanisms 110, 112 to secure the aircraft 100 in place. A plurality of wires that independently control the braking and parking brake functionalities run through the aircraft 100 from the BCU 108 to the left main brake mechanism 110 and the right main brake mechanism 112.

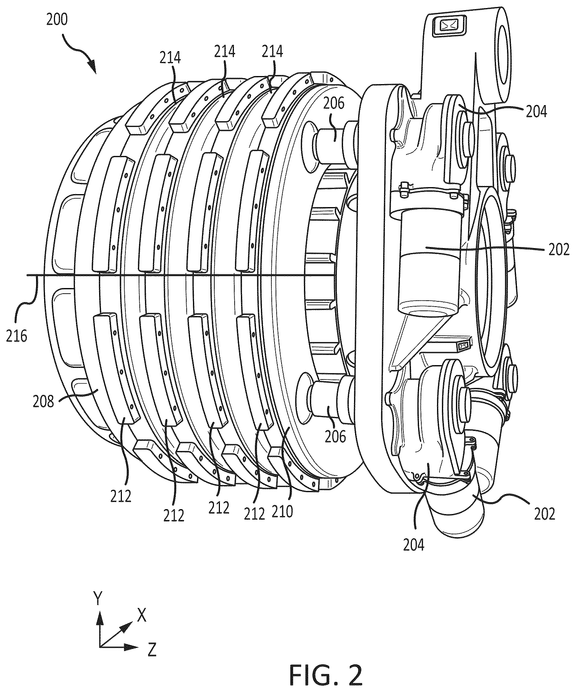

Referring to FIG. 2, an aircraft brake arrangement 200 in accordance with various embodiments is illustrated. The aircraft brake arrangement 200 may include a plurality of actuator motors 202, a plurality of electromechanical brake actuators (EBAs) 204, a plurality of ball screws 206, an end plate 208, and a pressure plate 210, and a plurality of rotating discs 212 and stators 214 positioned in an alternating fashion between the end plate 208 and the pressure plate 210. The rotating discs 212 may rotate about an axis 216 and the stators 214 may have no angular movement relative to the axis 216. Wheels may be coupled to the rotating discs 212 such that a linear speed of the aircraft is proportional to the angular speed of rotating discs 212. As force is applied to the pressure plate 210 towards the end plate 208 along the axis 216, the rotating discs 212 and the stators 214 are forced together in an axial direction. This causes the rotational speed of the rotating discs 212 to become reduced (i.e., causes braking effect) due to friction between the rotating discs 212, the stators 214, the end plate 208, and the pressure plate 210. In response to sufficient force being exerted on the rotating discs 212 via the pressure plate 210, the rotating discs 212 will stop rotating.

In order to exert this force onto the pressure plate 210, the actuator motor 202 may cause the EBA 204 to actuate. In various embodiments, the actuator motor 202 may be a brushless motor, such as a permanent magnet synchronous motor (PMSM), a permanentmagnet motor (PMM) or the like. In various embodiments, the EBA 204 may be coupled to or otherwise operate a motor shaft and a pressure generating device, such as, for example, a ball screw, a ram, and/or the like. In response to actuation or a brake command, the EBA 204 causes the actuator motor 202 to rotate. Rotation of the actuator motor 202 may cause rotation of the ball screw 206, and rotational motion of the ball screw 206 may be transformed into linear motion of ball screws 206. Linear translation of ball screws 206 towards pressure plate 210 applies force on pressure plate 210 towards end plate 208.

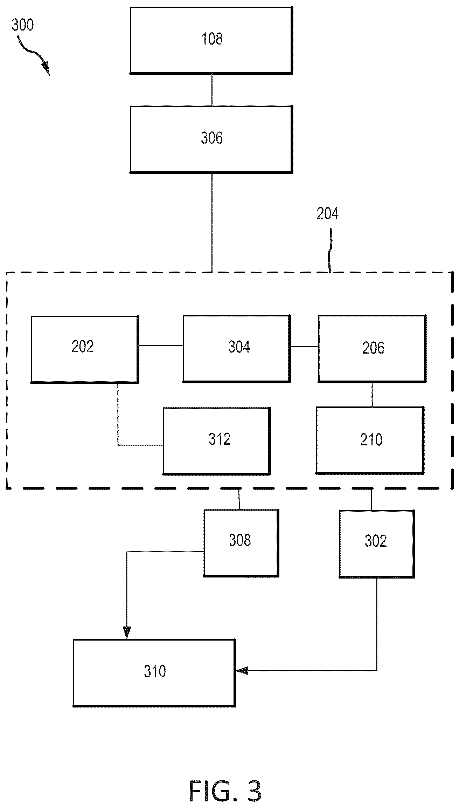

The EBA 204 is actuated in response to electrical current being applied to the actuator motor 202. The amount of force applied by the EBA 204 is related to the amount of electrical current applied to the actuator motor 202. With further reference to FIG. 3, in various embodiments, an electromechanical brake actuator control system 300, or brake system, may include an electromechanical brake actuator controller (EBAC) in communication with each EBA 204. In various embodiments, the electromechanical brake actuator control system 300 may include an electrical current sensor 312 to detect an amount of electrical current provided to actuator motor 202. The electrical current sensor 312 may be in communication with actuator motor 202 and/or with various other components of an EBA 204, an electromechanical brake actuator control system 300, and/or the aircraft 100 of FIG. 1. In various embodiments, the electrical current sensor 312 may be disposed on or adjacent to actuator motor 202. However, in various embodiments, the electrical current sensor 312 may be disposed in any location suitable for detection of electrical current supplied to the actuator motor 202, such as, for example, in the EBAC.

Application of electrical current to actuator motor 202 causes rotation of a motor shaft 304. In various embodiments, electromechanical brake actuator control system 300 may include a position sensor 308. The position sensor 308 may be configured so as to measure the rotational speed and position of the motor shaft 304. In various embodiments, the position sensor 308 may be disposed in or adjacent to EBA 204, or on or adjacent to actuator motor 202. However, the position sensor 308 may be disposed in any location suitable for detection of the rotational speed and position of motor shaft 304. In various embodiments, position sensor 308 may include a resolver, tachometer, or Hall sensor, among others.

In various embodiments, the electromechanical brake actuator control system 300 may include a load cell 302. The load cell 302 may be configured so as to measure the amount of force being applied between the ball screws 206 and the pressure plate 210. In various embodiments, the load cell 302 may be disposed in or adjacent to EBA 204, or on or adjacent to ball screws 206. However, load cell 302 may be disposed in any location suitable for detection of the force being applied between the ball screws 206 and the pressure plate 210. A controller may receive the detected force and rotational speed and calculate an adjusted force and an adjusted rotational speed based on those detected values. In various embodiments, the electromechanical brake actuator control system 300 may include a fault tolerant module 310.

In various embodiments, a system for brake actuator operation with load cell fault tolerant technology includes four load cells 302, four electrical current sensors 312, four position sensors 308, and at least one controller. The system for multiple brake actuator operation via one load cell may include a fault tolerant module 310. In various embodiments, the fault tolerant module 310 may be a controller and/or processor. In various embodiments, the fault tolerant module 310 may be implemented in a single controller and/or processor. In various embodiments, the fault tolerant module 310 may be implemented in multiple controllers and/or processors. In various embodiments, the fault tolerant module 310 may be implemented in an electromechanical actuator controller and/or a brake control unit. With reference to FIGS. 1, 2, and 3, in various embodiments, the BCU 108 and thus, the EBAC 306, are configured to control the EBAs 204.

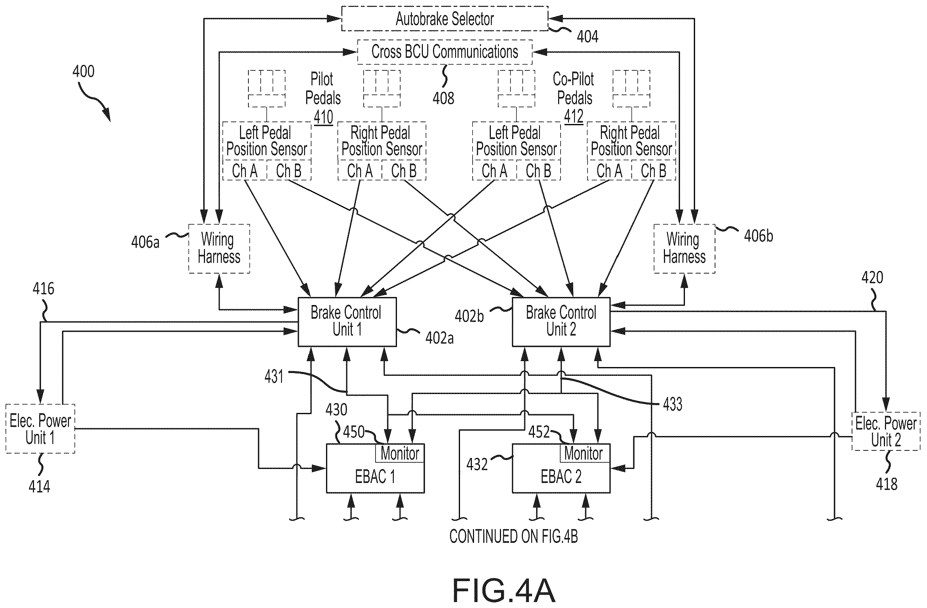

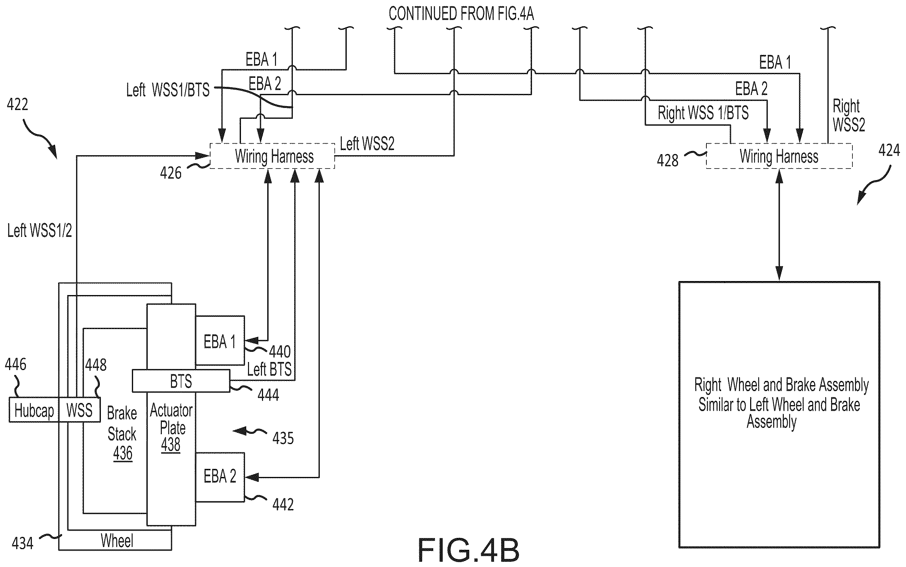

Referring now to FIGS. 4A and 4B, an E-Brake system 400 with two wheels and two actuators per brake E-brake system architecture is illustrated, in accordance with various embodiments. In various embodiments, the E-Brake system 400 includes two independently active brake control units (BCUs) 402a and 402b. In various embodiments, there is only one control card in each of the BCUs 402a and 402b, since there are two independently active BCUs, which supports fire events in the aircraft electrical bay that may cause E-brake system failure or malfunction. In various embodiments, the BCUs 402a and 402b are each individually communicatively coupled to an autobrake selector 404 via wiring harness 406a and 406b, respectively. In various embodiments, the BCUs 402a and 402b are configured to communicate via cross BCU communications mechanism 408 via the wiring harness 406a and 406b, respectively. In various embodiments, the BCUs 402a and 402b are configured to receive input signals from pilot pedals 410 and co-pilot pedals 412. In various embodiments, the pilot pedals 410 and the co-pilot pedals 412 each include a Channel A and a Channel B left position sensor and a Channel A and a Channel B right position sensor, which are respectively communicatively coupled to the BCUs 402a and 402b.

In various embodiments, the BCU 402a is powered by an electrical power unit 414. In various embodiments, the power is +28 Volts DC. In various embodiments, the BCU 402a is configured to communicate with and control the electrical power unit 414 via power hardware interlocks 416. In various embodiments, the BCU 402b is powered by an electrical power unit 418. In various embodiments, the power is +28 Volts DC. In various embodiments, the BCU 402b is configured to communicate with and control the electrical power unit 418 via power hardware interlocks 420.

In various embodiments, BCUs 402a and 402b are each individually communicatively coupled to at least one left wheel and brake assembly 422 and at least one right wheel and brake assembly 424 via a left wiring harness 426 and a right wiring harness 428, respectively. In various embodiments, the BCUs 402a and 402b are each individually communicatively coupled to electromechanical brake actuator controllers (EBAC) 430 and EBAC 432 via control area network (CAN) busses 431 and 433. In various embodiments, the EBAC 430 is powered via the electrical power unit 414. In various embodiments, the EBAC 430 is powered with high power ± 130 Volts AC and +28 Volts DC via the electrical power unit 414. In various embodiments, the EBAC 430 is communicatively coupled to the left wheel and brake assembly 422 via the left wiring harness 426. In various embodiments, the EBAC 430 is communicatively coupled to the right wheel and brake assembly 424 via the right wiring harness 428. In various embodiments, the EBAC 432 is powered via the electrical power unit 418. In various embodiments, the EBAC 432 is powered with high power ± 130 Volts AC and +28 Volts DC via the electrical power unit 418. In various embodiments, the EBAC 432 is communicatively coupled to the left wheel and brake assembly 422 via the left wiring harness 426. In various embodiments, the EBAC 432 is communicatively coupled to the right wheel and brake assembly 424 via the right wiring harness 428.

In various embodiments, the left wheel and brake assembly 422 includes a wheel 434 mechanically coupled to a brake 435. In various embodiments, the brake 435 includes a brake stack 436, an actuator plate 438, a first electromechanical brake actuator (EBA) 440, and a second EBA 442. In various embodiments, the brake 435 further includes a brake temperature sensor (BTS) 444. In various embodiments, the BTS 444 is communicatively coupled to the BCU 402a via the left wiring harness 426. In various embodiments, the left wheel and brake assembly 422 further includes a hubcap 446 mechanically coupled to the wheel 434. In various embodiments, a wheel speed sensor (WSS) 448 may be positioned within the hubcap 446. In that regard, the WSS 448 is a dual channel sensor in that the WSS 448 includes a first channel that sends a signal to the BCU 402a and a second channel that sends a signal to the BCU 402b. In various embodiments, each of the first EBA 440 and the second EBA 442 are powered via a three-phase power, each comprises a resolver, and each include a load cell (LC) sensor, which is powered via LC power. In various embodiments, the right wheel and brake assembly 424 has a similar configuration to that of the left wheel and brake assembly 422. In various embodiments, the first EBA 440 is configured to be controlled via the EBAC 430 and the second EBA 442 is configured to be controlled via the EBAC 432.

In various embodiments, any EBAC command from the BCUs 402a and 402b may be resolved by monitor circuit 450 in the EBAC 430 and monitor circuit 452 in the EBAC 432. In various embodiments, responsive to both the CAN busses 431 and 433 being active, the E-brake system 400 utilizes information from BCU 402a. In various embodiments, responsive to one of the CAN busses being inactive, i.e., at least one of the CAN bus 431 or the CAN bus 433, the E-brake system 400 utilizes the other CAN bus. In various embodiments, if both the CAN busses 431 and 433 are inactive, then the EBACs 430 and 432 are on standby, i.e., the monitor circuits 450 and 452 are still actively monitoring for a valid signal from the BCUs 402a and/or 402b or an emergency brake switch. In various embodiments, the monitor circuits 450 and 452 are independent from the processor of the EBACs 430 and 432, respectively. That is, for example, in various embodiments, the monitor circuits 450 and 452 may be a dedicated Field Programmable Gate Array (FPGA) to provide dissimilarity. In various embodiments, responsive to a loss of one of the EBACs 430 or 432, the other EBA is configured to provide 50% differential braking force with antiskid protection controlled by the other operational EBAC. In various embodiments, responsive to a loss of one of BCU 420a or 402b, full braking is maintained via the other BCU. In various embodiments, responsive to a loss of one of the electric power units 414 or 418 and thus one of the EBACs 430 and 432, the other EBA is configured to provide 50% differential force braking with antiskid protection controlled by the other operational EBAC.

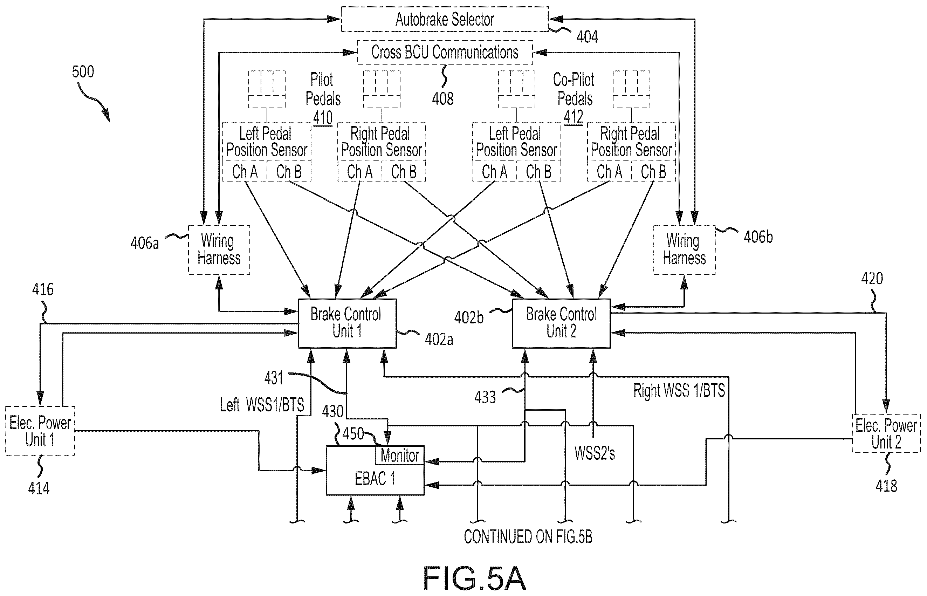

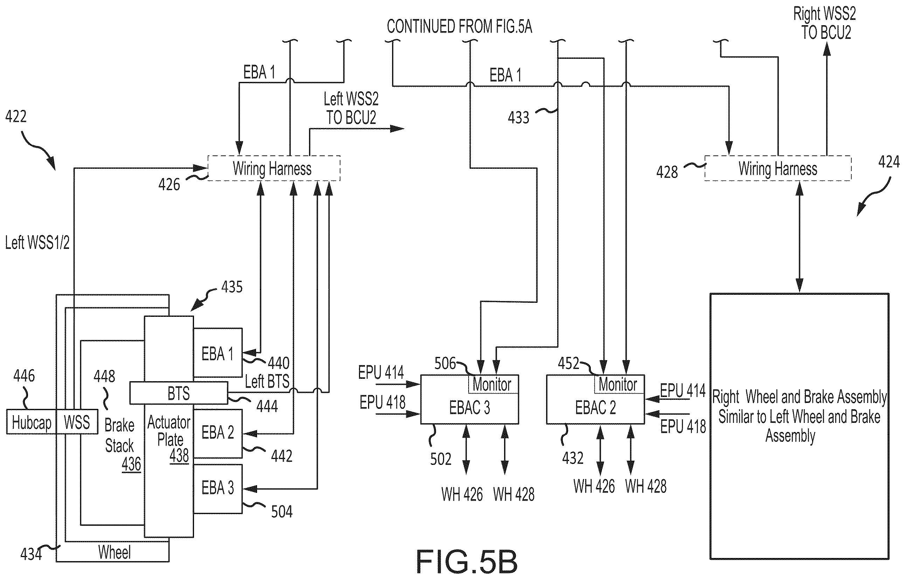

Referring now to FIGS. 5A and 5B, an E-Brake system 500 two wheels and three actuators per brake E-brake system architecture is illustrated, in accordance with various embodiments. In various embodiments, the E-Brake system 500 includes two independently active brake control units (BCUs) 402a and 402b. In various embodiments, there is only one control card in each of the BCUs 402a and 402b, since there are two independently active BCUs, which supports fire events in the aircraft electrical bay that may cause E-brake system failure or malfunction. In various embodiments, the BCUs 402a and 402b are each individually communicatively coupled to an autobrake selector 404 via wiring harness 406a and 406b, respectively. In various embodiments, the BCUs 402a and 402b are configured to communicate via cross BCU communications mechanism 408 via the wiring harness 406a and 406b, respectively. In various embodiments, the BCUs 402a and 402b are configured to receive input signals from pilot pedals 410 and co-pilot pedals 412. In various embodiments, the pilot pedals 410 and the co-pilot pedals 412 each include a Channel A and a Channel B left position sensor and a Channel A and a Channel B right position sensor, which are respectively communicatively coupled to the BCUs 402a and 402b.

In various embodiments, the BCU 402a is powered by an electrical power unit 414. In various embodiments, the power is +28 Volts DC. In various embodiments, the BCU 402a is configured to communicate with and control the electrical power unit 414 via power hardware interlocks 416. In various embodiments, the BCU 402b is powered by an electrical power unit 418. In various embodiments, the power is +28 Volts DC. In various embodiments, the BCU 402b is configured to communicate with and control the electrical power unit 418 via power hardware interlocks 420.

In various embodiments, BCUs 402a and 402b are each individually communicatively coupled to at least one left wheel and brake assembly 422 and at least one right wheel and brake assembly 424 via a left wiring harness 426 and a right wiring harness 428, respectively. In various embodiments, the BCUs 402a and 402b are each individually communicatively coupled to electromechanical brake actuator controllers (EBAC) 430, EBAC 432, and EBAC 502 via control area network (CAN) busses 431 and 433. In various embodiments, the EBAC 430 is powered via the electrical power unit 414 and electrical power unit 418. In various embodiments, the EBAC 430 is powered with high power ± 130 Volts AC and +28 Volts DC via the electrical power unit 414 and the electrical power unit 418. In various embodiments, the EBAC 430 is communicatively coupled to the left wheel and brake assembly 422 via the left wiring harness 426. In various embodiments, the EBAC 430 is communicatively coupled to the right wheel and brake assembly 424 via the right wiring harness 428. In various embodiments, the EBAC 432 is powered via the electrical power unit 414 and electrical power unit 418. In various embodiments, the EBAC 432 is powered with high power ± 130 Volts AC and +28 Volts DC via the electrical power unit 414 and the electrical power unit 418. In various embodiments, the EBAC 432 is communicatively coupled to the left wheel and brake assembly 422 via the left wiring harness 426. In various embodiments, the EBAC 432 is communicatively coupled to the right wheel and brake assembly 424 via the right wiring harness 428. In various embodiments, the EBAC 502 is powered via the electrical power unit 414 and electrical power unit 418. In various embodiments, the EBAC 502 is powered with high power ± 130 Volts AC and +28 Volts DC via the electrical power unit 414 and the electrical power unit 418. In various embodiments, the EBAC 502 is communicatively coupled to the left wheel and brake assembly 422 via the left wiring harness 426. In various embodiments, the EBAC 502 is communicatively coupled to the right wheel and brake assembly 424 via the right wiring harness 428.

In various embodiments, the left wheel and brake assembly 422 includes a wheel 434 mechanically coupled to a brake 435. In various embodiments, the brake 435 includes a brake stack 436, an actuator plate 438, a first electromechanical brake actuator (EBA) 440, a second EBA 442, and a third EBA 504. In various embodiments, the brake 435 further includes a brake temperature sensor (BTS) 444. In various embodiments, the BTS 444 is communicatively coupled to the BCU 402a via the left wiring harness 426. In various embodiments, the left wheel and brake assembly 422 further includes a hubcap 446 mechanically coupled to the wheel 434. In various embodiments, a wheel speed sensor (WSS) 448 may be positioned within the hubcap 446. In that regard, the WSS 448 is a dual channel sensor in that the WSS 448 includes a first channel that sends a signal to the BCU 402a and a second channel that sends a signal to the BCU 402b. In various embodiments, each of the first EBA 440, the second EBA 442, and the third EBA 504 are powered via a three-phase power, each comprises a resolver, and each include a load cell (LC) sensor, which is powered via LC power. In various embodiments, the right wheel and brake assembly 424 has a similar configuration to that of the left wheel and brake assembly 422. In various embodiments, the first EBA 440 is configured to be controlled via the EBAC 430, the second EBA 442 is configured to be controlled via the EBAC 432, and the third EBA 504 is configured to be controlled via the EBAC 502.

In various embodiments, any EBAC command from the BCUs 402a and 402b may be resolved by monitor circuit 450 in the EBAC 430, monitor circuit 452 in the EBAC 432, and monitor circuit 506 in the EBAC 502. In various embodiments, responsive to both the CAN busses 431 and 433 being active, the E-brake system 400 utilizes information from BCU 402a. In various embodiments, responsive to one of the CAN busses being inactive, i.e., at least one of the CAN bus 431 or the CAN bus 433, the E-brake system 400 utilizes the other CAN bus. In various embodiments, if both the CAN busses 431 and 433 are inactive, then the EBACs 430, 432, and 502 are on standby, i.e., the monitor circuits 450, 452, and 506 are still actively monitoring for a valid signal from the BCUs 402a and/or 402b or an emergency brake switch. In various embodiments, the monitor circuits 450, 452, and 506 are independent from the processor of the EBACs 430, 432, and 502, respectively. That is, for example, in various embodiments, the monitor circuits 450, 452, and 506 may be a dedicated Field Programmable Gate Array (FPGA) to provide dissimilarity. In various embodiments, responsive to a loss of one of the EBACs 430, 432, or 502, the other operational EBAs controlled by the other two EBACs are configured to provide 100% differential braking force with antiskid protection. In various embodiments, responsive to a loss of one of BCU 420a or 402b, full braking is maintained via the other BCU.

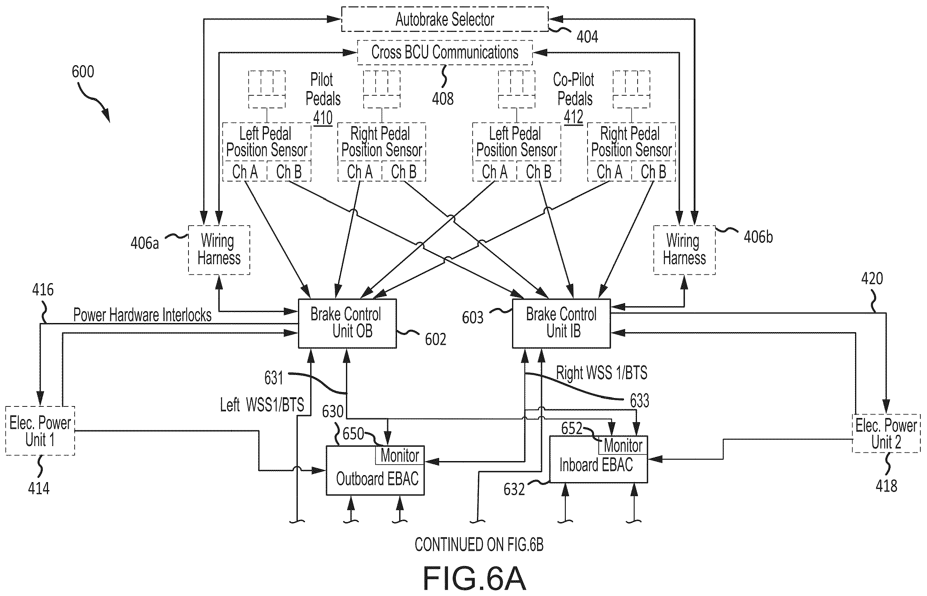

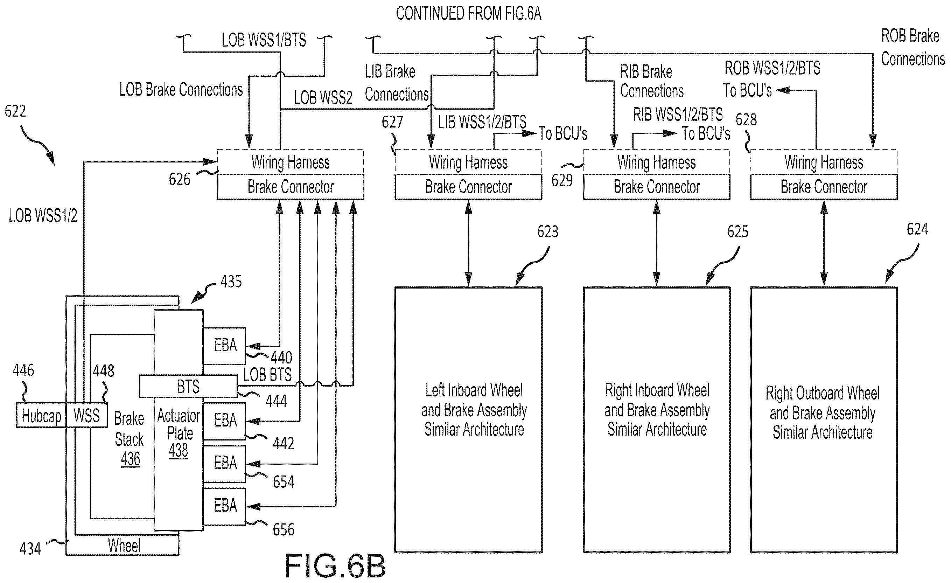

Referring now to FIGS. 6A and 6B, an E-Brake system 400 four wheels and four actuators per brake E-brake system architecture is illustrated, in accordance with various embodiments. In various embodiments, the E-Brake system 600 includes two independently active brake control units (BCUs): an outboard (OB) BCU 602 and an inboard (IB) BCU 603. In various embodiments, there is only one control card in each of the outboard BCU 602 and the inboard BCU 603, since there are two independently active BCUs, which supports fire events in the aircraft electrical bay that may cause E-brake system failure or malfunction. In various embodiments, the outboard BCU 602 and the inboard BCU 603 are each individually communicatively coupled to an autobrake selector 404 via wiring harness 406a and 406b, respectively. In various embodiments, the outboard BCU 602 and the inboard BCU 603 are configured to communicate via cross BCU communications mechanism 408 via the wiring harness 406a and 406b, respectively. In various embodiments, the outboard BCU 602 and the inboard BCU 603 are configured to receive input signals from pilot pedals 410 and co-pilot pedals 412. In various embodiments, the pilot pedals 410 and the co-pilot pedals 412 each include a Channel A and a Channel B left position sensor and a Channel A and a Channel B right position sensor, which are respectively communicatively coupled to the outboard BCU 602 and the inboard BCU 603.

In various embodiments, the outboard BCU 602 is powered by an electrical power unit 414. In various embodiments, the power is +28 Volts DC. In various embodiments, the outboard BCU 602 is configured to communicate with and control the electrical power unit 414 via power hardware interlocks 416. In various embodiments, the inboard BCU 603 is powered by an electrical power unit 418. In various embodiments, the power is +28 Volts DC. In various embodiments, the inboard BCU 603 is configured to communicate with and control the electrical power unit 418 via power hardware interlocks 420.

In various embodiments, the outboard BCU 602 and the inboard BCU 603 are each individually communicatively coupled to at least one left outboard (LOB) wheel and brake assembly 622, at least one left inboard (LIB) wheel and brake assembly 623, at least one right outboard (ROB) one wheel and brake assembly 624, and at least one right inboard (RIB) wheel and brake assembly 625 via a first wiring harness 626, second wiring harness 627, third wiring harness 628, and fourth wiring harness 629, respectively. In various embodiments, the outboard BCU 602 and the inboard BCU 603 are each individually communicatively coupled to outboard electromechanical brake actuator controllers (EBAC) 630 and inboard EBAC 632 via control area network (CAN) busses 631 and 633. In various embodiments, the outboard EBAC 630 is powered via the electrical power unit 414. In various embodiments, the outboard EBAC 630 is powered with high power ± 130 Volts AC and +28 Volts DC via the electrical power unit 414. In various embodiments, the outboard EBAC 630 is communicatively coupled to the LOB wheel and brake assembly 622 via the first wiring harness 626. In various embodiments, the outboard EBAC 630 is communicatively coupled to the ROB wheel and brake assembly 624 via the third wiring harness 628. In various embodiments, the inboard EBAC 632 is powered via the electrical power unit 418. In various embodiments, the inboard EBAC 632 is powered with high power ± 130 Volts AC and +28 Volts DC via the electrical power unit 418. In various embodiments, the inboard EBAC 632 is communicatively coupled to the LIB wheel and brake assembly 623 via the second wiring harness 627. In various embodiments, the inboard EBAC 632 is communicatively coupled to the RIB wheel and brake assembly 625 via the fourth wiring harness 629.

In various embodiments, the LOB wheel and brake assembly 622 includes a wheel 434 mechanically coupled to a brake 435. In various embodiments, the brake 435 includes a brake stack 436, an actuator plate 438, a first electromechanical brake actuator (EBA) 440, a second EBA 442, a third EBA 654, and a fourth EBA 656. In various embodiments, the brake 435 further includes a brake temperature sensor (BTS) 444. In various embodiments, the BTS 444 is communicatively coupled to the BCU outboard via the first wiring harness 626. In various embodiments, the LOB wheel and brake assembly 622 further includes a hubcap 446 mechanically coupled to the wheel 434. In various embodiments, a wheel speed sensor (WSS) 448 may be positioned within the hubcap 446. In that regard, the WSS 448 is a dual channel sensor in that the WSS 448 includes a first channel that sends a signal to the outboard BCU 602 and a second channel that sends a signal to the inboard BCU 603. In various embodiments, each of the first EBA 440, the second EBA 442, the third EBA 654, and the fourth EBA 656 are powered via a three-phase power, each comprises a resolver, and each include a load cell (LC) sensor, which is powered via LC power. In various embodiments, the LIB wheel and brake assembly 623, the ROB wheel and brake assembly 624, and the RIB wheel and brake assembly 625 have a similar configuration to that of the LOB wheel and brake assembly 622.

In various embodiments, any EBAC command from the outboard BCU 602 and the inboard BCU 603 may be resolved by monitor circuit 650 in the outboard EBAC 630 and monitor circuit 652 in the inboard EBAC 632. In various embodiments, responsive to a loss of one of the outboard EBAC 630 or the inboard EBAC 632, the other EBAC is configured to provide 50% differential braking force with antiskid protection. In various embodiments, responsive to a loss of one of the outboard BCU 602 and the inboard BCU 603, full braking is maintained where one control channel applies its own commands to the other channel. For example, in various embodiments, responsive to the outboard BCU 602 being inactive, the inboard BCU 603 functions normally. The monitor circuit 650 in the outboard EBAC 630 detecting loss of communications with outboard BCU 602 will apply the IB commands to the LOB wheel and brake assembly 622 and the ROB wheel and brake assembly 624, where a left IB brake command is applied to the LOB wheel and brake assembly 622, and a right IB brake command is applied to the ROB wheel and brake assembly 624. In various embodiments, it is possible to scale the IB brake commands to the LOB wheel and brake assembly 622 and the ROB wheel and brake assembly 624 based on agreed logic agreed upon with the original equipment manufacturer (OEM). In various embodiments, responsive to a loss of one of the electric power units 414 or 418 and thus one of the outboard EBAC 630 or the inboard EBAC 632, the other EBAC is configured to provide 50% differential braking force with antiskid protection.

Accordingly, in various embodiments, these E-brake system architectures provide a capability to address future electric brake systems from small two-wheel aircrafts all the way to Next Generation Single-Aisle (NGSA). In various embodiments, these architectures include a dissimilar path of braking command in case of emergency to support certification objectives.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1 %, or within 0.01 % of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An electromechanical brake, E-brake, system (500), comprising:
a first brake control unit (402a);
a second brake control unit (402b);
a first electromechanical brake actuator controller (430), wherein the first electromechanical brake actuator controller comprises a first monitor circuit (450) and wherein the first monitor circuit is communicatively coupled to the first brake control unit and the second brake control unit;
a second electromechanical brake actuator controller (432), wherein the second electromechanical brake actuator controller comprises a second monitor circuit (452) and wherein the second monitor circuit is communicatively coupled to the first brake control unit and the second brake control unit;
a first wheel and brake assembly (422), wherein the first wheel and brake assembly is communicatively coupled to the first electromechanical brake actuator controller and the second electromechanical brake actuator controller; and
a second wheel and brake assembly (424), wherein the second wheel and brake assembly is communicatively coupled to the first electromechanical brake actuator controller and the second electromechanical brake actuator controller.

2. The E-brake system of claim 1, wherein the first monitor circuit (450) is independent of a first processor in the first electromechanical brake actuator controller (430), wherein the second monitor circuit (452) is independent of a second processor in the second electromechanical brake actuator controller (432), and wherein the first monitor circuit and the second monitor circuit are dedicated Field Programmable Gate Arrays, FPGA.

3. The E-brake system of claim 1 or 2, wherein the first brake control unit (402a) is communicatively coupled to the first electromechanical brake actuator controller (430) and the second electromechanical brake actuator controller (432) via a first control area network bus (431) and wherein the second brake control unit (402b) is communicatively coupled to the first electromechanical brake actuator controller and the second electromechanical brake actuator controller via a second control area network bus (433).

4. The E-brake system of claim 3, wherein, responsive to both the first control area network bus (431) and the second control area network bus (433) being active, the first wheel and brake assembly (422) and the second wheel and brake assembly (424) are controlled via the first brake control unit (402a) and/or wherein, responsive to one of the first control area network bus (431) or the second control area network (433) bus being inactive, the first wheel and brake assembly (422) and the second wheel and brake assembly (424) are controlled via at least one of the first brake control unit (402a) or the second brake control unit (402b) associated with the other one of the first control area network bus or the second control area network bus that is active.

5. The E-brake system of claim any preceding claim, wherein each of the first wheel and brake assembly (422) and the second wheel and brake assembly (424) comprise:
a first electromechanical brake actuator (440), wherein the first electromechanical brake actuator is controlled via the first electromechanical brake actuator controller (430); and
a second electromechanical brake actuator (442), wherein the second electromechanical brake actuator is controlled via the second electromechanical brake actuator controller (432); and optionally wherein, responsive to a loss of at least one of the first electromechanical brake actuator controller (430) or the second electromechanical brake actuator controller (432), the other one of the first electromechanical brake actuator controller or the second electromechanical brake actuator controller that is operational is configured to provide 50% differential braking force with antiskid protection to the first wheel and brake assembly (422) and the second wheel and brake assembly (424).

6. The E-brake system of any preceding claim, wherein, responsive to a loss of at least one of the first brake control unit (402a) or the second brake control unit (402b), at least one of the first brake control unit or the second brake control unit that is operational is configured to provide full braking of the first wheel and brake assembly (422) and the second wheel and brake assembly (424); and/or wherein the E-brake system further comprises:
a first electric power unit (414), wherein the first electric power unit is configured to power the first brake control unit (402a) and the first electromechanical brake actuator controller (430); and
a second electric power unit (418), wherein the second electric power unit is configured to power the second brake control unit (402b) and the second electromechanical brake actuator controller (432),
wherein, responsive to a loss of one of the first electric power unit or the second electric power unit, at least one of the first brake control unit and the first electromechanical brake actuator controller or the second brake control unit and the second electromechanical brake actuator controller that is powered by an operational one of the first electric power unit or the second electric power unit is configured to provide 50% differential braking force with antiskid protection.

7. The E-brake system of claim 1, further comprising:
a third electromechanical brake actuator controller, wherein the third electromechanical brake actuator controller comprises a third monitor circuit, wherein the third monitor circuit is communicatively coupled to the first brake control unit and the second brake control unit, wherein the third monitor circuit is independent of a third processor in the third electromechanical brake actuator controller, and wherein the third monitor circuit is a dedicated Field Programmable Gate Arrays, FPGA.

8. The E-brake system of claim 7, further comprising:
a first electric power unit (414), wherein the first electric power unit is configured to power the first brake control unit (402a), the first electromechanical brake actuator controller (430), the second electromechanical brake actuator controller (432), and the third electromechanical brake actuator controller; and
a second electric power unit (418), wherein the second electric power unit is configured to power the second brake control unit (402b), the first electromechanical brake actuator controller (430), the second electromechanical brake actuator controller (432), and the third electromechanical brake actuator controller.

9. The E-brake system of claim 7, wherein each of the first wheel and brake assembly (422) and the second wheel and brake assembly (424) comprise:
a first electromechanical brake actuator (440), wherein the first electromechanical brake actuator is controlled via the first electromechanical brake actuator controller (430);
a second electromechanical brake actuator (442), wherein the second electromechanical brake actuator is controlled via the second electromechanical brake actuator controller (432); and
a third electromechanical brake actuator, wherein the third electromechanical brake actuator is controlled via the third electromechanical brake actuator controller; and/or wherein, responsive to a loss of one of the first electromechanical brake actuator controller, the second electromechanical brake actuator controller, or the third electromechanical brake actuator controller, operational electromechanical brake actuator controllers are configured to provide 100% differential braking force with antiskid protection via associated electromechanical brake actuators.

10. An electromechanical brake, E-brake, system, comprising:
an outboard brake control unit (602);
an inboard brake control unit (603);
an outboard electromechanical brake actuator controller (630), wherein the outboard electromechanical brake actuator controller comprises a first monitor circuit and wherein the first monitor circuit is communicatively coupled to the outboard brake control unit and the inboard brake control unit;
an inboard electromechanical brake actuator controller (632), wherein the inboard electromechanical brake actuator controller comprises a second monitor circuit and wherein the second monitor circuit is communicatively coupled to the outboard brake control unit and the inboard brake control unit;
a left outboard wheel and brake assembly (622), wherein the left outboard wheel and brake assembly is communicatively coupled to the outboard electromechanical brake actuator controller;
a right outboard wheel and brake assembly (624), wherein the right outboard wheel and brake assembly is communicatively coupled to the outboard electromechanical brake actuator controller;
a left inboard wheel and brake assembly (623), wherein the left inboard wheel and brake assembly is communicatively coupled to the inboard electromechanical brake actuator controller; and
a right inboard wheel and brake assembly (625), wherein the right inboard wheel and brake assembly is communicatively coupled to the inboard electromechanical brake actuator controller.

11. The E-brake system of claim 10, wherein the first monitor circuit is independent of a first processor in the outboard electromechanical brake actuator controller (630), wherein the second monitor circuit is independent of a second processor in the inboard electromechanical brake actuator controller (632), and wherein the first monitor circuit and the second monitor circuit are dedicated Field Programmable Gate Arrays, FPGA.

12. The E-brake system of claim 10, wherein the outboard brake control unit (602) is communicatively coupled to the outboard electromechanical brake actuator controller (630) and the inboard electromechanical brake actuator controller (632) via a first control area network bus (631) and wherein the inboard brake control unit (603) is communicatively coupled to the outboard electromechanical brake actuator controller and the inboard electromechanical brake actuator controller via a second control area network bus (633).

13. The E-brake system of claim 12, wherein, responsive to both the first control area network bus (631) and the second control area network bus (633) being active, the left outboard wheel and brake assembly (622) and the right outboard wheel and brake assembly (644) are configured to be controlled via the outboard brake control unit (602) and the left inboard wheel and brake assembly (623) and the right inboard wheel and brake assembly (625) are configured to be controlled via the inboard brake control unit (603).

14. The E-brake system of claim 12, wherein, responsive to one of the first control area network bus (631) or the second control area network bus (633) being inactive, the left outboard wheel and brake assembly (622), the right outboard wheel and brake assembly (624), the left inboard wheel and brake assembly (623), and the right inboard wheel and brake assembly (625) are configured to be controlled via at least one of the outboard brake control unit (602) or the inboard brake control unit (603) associated with the other one of the first control area network bus or the second control area network bus that is active.

15. The E-brake system of claim 10, wherein, responsive to a loss of at least one of the outboard electromechanical brake actuator controller (630) or the inboard electromechanical brake actuator controller (632), the other one of the outboard electromechanical brake actuator controller or the inboard electromechanical brake actuator controller that is operational is configured to provide 50% differential braking force with antiskid protection to the respective ones of the left outboard wheel and brake assembly (622), the right outboard wheel and brake assembly (624), the left inboard wheel and brake assembly (623), or the right inboard wheel and brake assembly (625); and/or wherein, responsive to a loss of at least one of the outboard brake control unit or the inboard brake control unit, at least one of the outboard brake control unit or the inboard brake control unit that is operational is configured to provide full braking of the left outboard wheel and brake assembly, the right outboard wheel and brake assembly, the left inboard wheel and brake assembly, and the right inboard wheel and brake assembly by applying a currently applied respective braking to all braking assemblies.
